# EUROPEAN PATENT APPLICATION

(11) **EP 2 916 324 A2**
(43) Date of publication of application: **09.09.2015**
(21) Application number: 13851531.7
(22) Date of filing: 28.10.2013
(51) Int. Cl.: G11B 27/02, G06F 3/0484, G06F 17/21

(54) **METHODS FOR PRODUCING MULTIMEDIA PRESENTATION PROTOTYPES, DEVICES FOR PRODUCING MULTIMEDIA PRESENTATION PROTOTYPES, METHODS FOR USING DEVICES FOR PRODUCING MULTIMEDIA PRESENTATION PROTOTYPES (VARIANTS)**

(30) Priority: 30.10.2012 RU 2012146006
(71) Applicant: Gevlich, Sergey Anatoljevich, Habarovsk 680038 (RU)
(72) Inventor: Gevlich, Sergey Anatoljevich, Habarovsk 680038 (RU)
(74) Representative: Spengler, Robert
(86) International application number: PCT/RU2013/000960
(87) International publication number: WO 2014/070044

(57) **Abstract**

The invention relates to embodiments for the production of multimedia presentation prototypes. In the claimed solution, a single coherent presentation text is prepared and introduced into a device, the presentation text is divided into fragments that correspond to frames of the presentation and a marker for the layout of the text in the frames is inserted between all neighbouring frames, an audio track of the oral voice content of the presentation is recorded and laid out on the frames, the visual imagery of the frames is produced with graphical figures of the frame being created and edited for each frame, a visual display of all of the actions in respect of the creation and editing of the figures is recorded, and the presentation prototype is edited, reviewed to assess readiness and stored in a multimedia file.

## Description

### Technical field

The invention relates to information technology field and designed for creating audiovisual multimedia presentations consisting of sequences of scenes (frames).

The presentations may be used for personal or professional purposes.

### Technical level

There are methods and devices for creating multimedia presentations (refer to US 8,078,967, US 7,941,757), consisting of definition of scenes (frames) sequence, their text and visual content and the order of transition between scenes, preparing and mutual composition of text, visual imagery and audio track into one audiovisual file.

The proximate to the claimed solution are the methods and devices for creating multimedia presentations according to patent US 7,546,544.

The downsides of the claimed known solutions are high manpower effort and complexity of use.
The purpose of the claimed solution is removal of disadvantages of the known solutions.

### Disclosure

The purpose of the claimed solution is achieved by the fact that the methods of creating multimedia presentations prototypes, devices for creating multimedia presentations prototypes and applications of devices for creating multimedia presentations prototypes are performed by the following scenarios.

It is possible to create multimedia presentations prototypes in three scenarios:
- "*Text*/*Text_markup_into_frames*/*Sound*/*Sound_markup_into_frames*/*Graphics*";
- *"Text*/*Text_markup_into_frames*/*Graphics*/*Sound*/*Sound_markup_into_frames*";
- *"Sound*/*Text*/*Text_markup_into_frames*/*Sound_markup_into_frames*/*Graphics*".

The method of creating multimedia presentations prototypes in a scenario ***"Text*/*Text_markup_into_frames*/*Sound*/*Sound_markup_into_frames*/*Graphics*"** including determination of frames order, their textual and visual content and the order of transition between frames, preparation and mutual composition of text, visual content and audio track of multimedia presentation into audio-video file by using personal computer device (smartphone, tablet, laptop, PC), deviates with preparation and mutual arrangement of text, visual content and audio track is done as follows:
1) To prepare a single coherent presentation text and enter it into the device.
2) The presentation text is split into fragments corresponding to the presentation frames, placing the marker of the text markup into frames between all the neighbouring frames.
3) To record (load) an audio track with verbal voice content of the presentation.
4) To split the audio track with verbal voice content of the presentation into frames.
5) To create visual imagery of frames and for each frame of the presentation:
   - to create and edit graphic figures of the frame;
   - to record visual representation of all actions of creating and editing figures.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arrangement file of the presentation in a format allowing future editing of text, sound and visual imagery of frames in the next work session;
   c) To convert the arrangement file of the presentation into a video-file without possibility of future editing text, sound or images of frames.

The method of creating prototypes of multimedia presentations in a scenario ***"Text*/*Text_markup_into_frames*/*Graphics*/*Sound*/*Sound_markup_into_frames*"** including determination of frames order, textual and visual content and the order of transition between frames, preparation and mutual composition of text, visual content and audio track of multimedia presentation into audio-video file by using personal computer device (smartphone, tablet, laptop, PC), deviates with preparation and mutual arrangement of text, visual content and audio track is done as follows:
1) To prepare a single coherent presentation text and enter it into the device.
2) The presentation text is split into fragments corresponding to the presentation frames, placing the marker of the text markup into frames between all the neighbouring frames.
3) To create visual imagery of frames and for each frame of the presentation:
   - to create and edit graphic figures of the frame;
   - to record visual representation of all actions of creating and editing figures.
4) To record (load) an audio track with verbal voice content of the presentation.
5) To split the audio track with verbal voice content of the presentation into frames.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arranged file of the presentation in a format allowing future editing of text, sound and visual imagery of frames in the next work session;
   c) To convert the arrangement file of the presentation into a video-file without possibility of future editing text, sound or images of frames.

The method of creating prototypes of multimedia presentation in a scenario ***"Sound*/*Text*/*Text_markup_into_frames*/*Sound_markup_into_frames*/*Graphics"*** including determination of frames order, their textual and visual content and the order of transition between frames, preparation and mutual composition of text, visual content and audio track of multimedia presentation into the audio-video file, by using personal computer device (smartphone, tablet, laptop, PC), deviates with preparation and mutual arrangement of text, visual content and audio track is done as follows:
1) To record (load) an audio track with verbal voice content of the presentation.
2) To prepare a single coherent presentation text and enter it into the device.
3) The presentation text is split into fragments corresponding to the presentation frames, placing the marker of the text markup into frames between all the neighbouring frames.
4) To split the audio track with verbal voice content of the presentation into frames.
5) To create visual imagery of frames and for each frame of the presentation:
   - to create and edit graphic figures of the frame;
   - to record visual representation of all actions of creating and editing figures.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arrangement file of the presentation in a format allowing future editing of text, sound and visual imagery of frames in the next work session;
   c) To convert the arrangement file of the presentation into a video-file without possibility of future editing text, sound or images of frames.

Additionally in all three above mentioned scenarios
("*Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and "*Sound*/
*Text*/*Text_markup_into_farmes*/*Sound_markup_into_farmes*/*Graphics*") the audio track of verbal voice content of the presentation is split into frames as follows:
1) To display:
   a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
   b) Mutual visual border of text content of the presentation corresponding to splitting frames into the frames with marked up and not marked up sounding so that visual location of the border on screen stays constant as a result of move (scrolling) of frame bars in process of marking up.
2) To listen to sounding and when synchronization of one frame ends and synchronization of another frame begins:
   a) In case of manual markup to insert a marker of audio track markup, for example by pressing on image of text bar of the next frame and visually animating set up of the markup, e.g. by changing look of bar edge;
   b) In case of automatic speech recognition, automatic matching recognized words to texts of frames and automatic markup of audio track - to check accuracy of automatic sounding markup and if necessary to correct the markup.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") when creating and editing graphic figures of frame the following operations or their combinations are performed:
- to load graphic figures and images from external source;
- to record video/take a photo by the camera integrated into the device and to insert photos and videos into visual imagery of frames;
- automatically detect drawn figures and/or lines and correct their geometry, and if the suggested version is approved then delete originally created figures and/or lines, replace with the edited figures and/or lines, and the duration of creating and editing graphic figures is equal to duration of creating and editing originally created graphic figures and/or lines, excluding actual time for automatic correction and reviewing suggested versions;
- to attach indicating (connective) lines and captions to figures and automatically move matching lines and text along with figures when moving them in course of editing;
- to set a method of transition between visual imageries of two adjacent frames;
- to playback a fragment of audio track of current frame in order to check creation of visual imagery of frame, drawing and editing graphic figures;
- to perform test animation of already created part of visual imagery of frame in order to check creation of visual imagery of frame;
- to make integration (merging) of several graphic figures and/or their elements into complex objects with the possibility of following managing of these objects (moving, rotating, skewing, rescaling, showing/hiding, etc.) as integrated images.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Text*/*Text_markup_into_frames*/*Graphics*/*Sound*/*Sound_markup_into_frames*") when creating arrangement file of frame for synchronization of animation with sounding, the time of visual representation of creating and editing graphic figures of the frame visual imagery is determined by one of the following ways:
a) From the start marker of frame sounding on audio track to the end marker of frame sounding (including time of pauses before the first word and after the last one);
b) From the start of actual sounding of the first word of frame text to the end of sounding of the last word of frame text (excluding time of pauses before the first word and after the last one);
Thus in both ways a) and b) the additional delays (pauses) can be inserted before the start of sounding of the first word of the first frame and after ending of sounding of the last word of the last frame.

Additionally in all three above mentioned scenarios
(*"Text*/*Text_markup_into_frames*/*Sound*/*Sound_markup_into_frames*/*Graphics*",
"*Text*/*Text_markup-_into_frames*/*Graphics*/*Sound*/*Sound_markup_into_frames*" and
"*Sound*/*Text*/*Text_markup_into_frames*/*Sound_markup_into_frames*/*Graphics*") the correction of text, sound and visual imagery of frames is made as follows:
1) If there is a visual imagery in the original frame when splitting the original frame into two new frames:
   - to split text of the frame by the text markup marker into two fragments corresponding to two new frames;
   - to choose which one of two new created frames will have the visual imagery of the original frame;
   - to create visual imagery for the second frame created.
2) When integrating two adjacent original frames into one new:
   a) If there is no visual imagery in frames - to delete markers of text markup and audio track of frames;
   b) If there is visual imagery only in one of the integrated frames - to delete marker of text markup and audio track of frames and to attach visual imagery to the resulting integrated frame;
   c) If there are visual imageries in both integrated frames:
      - to delete markers of text markup and audio track of frames;
      - to create the resulting audio track by consecutive connection of two original audio tracks keeping their original sequence;
      - to create the resulting visual imagery by consecutive connection of two original visual imageries keeping their original sequence and rate of timescale of the original frames.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") markup of audio track of the presentation into frames can be corrected as follows:
- to determine two adjacent frames and location of marker of audio track markup to be corrected;
- to display an image of audio track with sounding end marker;
- to playback continuous consistent sounding of both frames and simultaneously visually display a time line with the locator of the current position of marker of audio track markup;
- to move the locator of marker of audio track markup on time line right or left after listening to end of one frame and beginning of the following one;
- to check the result after moving - to playback audio track from time mark N seconds to a new position of marker of audio track markup where N is from 0 to 4 seconds.

Additionally in all three above mentioned scenarios
("*Text*/*Text_markup_into_frames*/So*und*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") *a way* of transition between visual imageries of two adjacent frames when opening (creating) a new frame is done in the following ways or their combination:
- to save the image of the previous frame without changes as a start image of a new frame;
- to erase the image of the previous frame completely;
- to erase the entire image of the previous frame by moving eraser tool on screen;
- to erase the image of the previous frame up to background (background image);
- to erase a part of screen field by eraser tool (horizontally);
- to erase chosen elements of the image of the previous frame (to choose by elements);
- to restore a final image of the frame before the previous one (to cancel all changes of the image made on the previous frame);
- to move (rotate) visual field (virtual image sheet) of the previous frame, open a clean space for creating figures of a new frame and leave in sight a small part of the image of the previous frame;
- to minimize into an icon the resulting image of the previous frame placing the icon on the screen field of a new frame (as a reminder of the previous frame);
- to minimize the resulting image of the previous frame and leave it on the screen field of a new frame (for drawing a new image around the previous one);
- to extend the resulting image of the previous frame (a part of the image is possibly out of the frame) and leave the part apparent within the frame edges on the screen field of a new frame (for drawing a new image inside the part of the previous one).

Devices for creating multimedia presentations prototypes can be designed in versions *«Mini»* and ***«Screen».***

A device for creating multimedia presentations prototypes in *«**Mini**»* version is designed in the form of portable personal computer device (smartphone, tablet, laptop), containing a touch screen display provided with a sensor detecting the position of finger touch, on-screen or physical keyboard, built-in or external microphone, built-in or external speaker, data processing unit, connected to the display, keyboard, microphone and speaker and designed with option to receive, process and output signals and data.

Additionally the present device is designed with the following options:
- when displaying text on screen and user's touching the displayed text to process positions of finger touch as a command of location of the displayed text edges splitting into text fragments and to form data structures in the device memory corresponding to the specified fragments (frames);
- to split the recorded audio track into audio slices and to connect them with the text fragments (frames);
- to record a process of drawing by user's finger touch on the display and connect them with the text fragments (frames);
- to scale (shrink/expand) proportionally on the display playback time of drawing process by user's finger touch;
- to display on screen the recorded process of figures drawing corresponding to the matching text fragments (frames) on a time scale equal to sound duration of the audio slices corresponding to these text fragments (frames) with simultaneous playback of these audio fragments.

Additionally data processing unit is designed with the option to perform the following operations or their combinations:
- automatically detect verbal text pronunciation;
- automatically divide the recorded audio track into audio slices and connect these audio slices with the matching text fragments (frames);
- automatically detect drawn graphic figures and chose their smoothed and/or regular-shaped equivalents from the image library.

A device for creating multimedia presentations prototypes in «***Screen**»* version is designed in the form of portable personal computer device (smartphone, tablet, laptop) containing:
- a touch screen display provided with a sensor detecting the position of finger touch designed with an option of displaying on screen the device mode of operations selection panel, so that when touching different zones of the panel the device switches to corresponding modes of operation;
- a device on-screen mode of operations selection panel designed in the form of a bar visually divided into field-buttons with symbolic representations of device operation modes (icons), so when pressing on these field-buttons they expand lengthwise (unfold) and sub-buttons available in these modes of operations of the device appears;
- on-screen or physical keyboard;
- built-in or external microphone;
- built-in or external speaker;
- data processing unit, connected with the display, keyboard, microphone and speaker and designed with option to receive, process and output signals and data.

Additionally a device mode of operations selection panel is located in upper section of the screen across the entire width and is provided with fields-buttons *"Presentation management*", "*Text editing",* "*sound editing", "Graphic editing".* A work field of active operation mode is displayed under the selection panel on the device screen, thus at launching (startup) of the device if the processed multimedia presentations prototype is not chosen, the device switches to "*Presentation management* " mode; thus icons (final drawings) available for review or editing of the presentations prototypes with captions are displayed in a work field. And if the prototype is chosen at launch the device switches to "*Text editing"* mode of the chosen prototype, thus the text of prototype is displayed in a work field.

Additionally field-button "*Presentation management* " after it's opened (pressed) contains sub-buttons "*Create presentation", "Open presentation for editing",* "*Launch demonstration of presentation",* "*Delete presentation", "Save presentation as*", thus the icons (final drawings) of presentation prototypes with captions are displayed in a work field.

Additionally field-button "*Text editing"* after it's opened (pressed) contains sub-buttons "*Text import", "Text verbal dictation with recognition", "Text input from on-screen keyboard*", *"Insert the marker of the frame text edge",* thus the text of the prototype is displayed in a work field.

Additionally field-button "*Sound editing"* after it's opened (pressed) contains sub-buttons *"Import sound from file and markup sound into words*", "*Record sound from microphone and markup sound into words*", thus the text of the prototype visually split into segments (bars) corresponding to fragments (frames) of the presentation is displayed in a work field, so that the text part of the presentation for which an audio track is already marked up into fragments (frames) visually different from the part for which markup is not done yet.

Additionally, field-button *"Graphic editing"* after it's opened (pressed) contains sub-buttons "*turn on*/*turn off figures automatic recognition mode* ", "*turn on*/*turn off text narrator", "Move forward*/*back through frames",* thus image sheet (canvas), tools and palette for creating and editing graphic images of the current fragment (frame) is displayed in a work field.

Additionally, if at opening (pressing) "*sound editing"* button there are graphic images of the presentation fragments (frames), the icons of graphic images corresponding to these fragments (frames) are displayed in segments (bars) of a work field along with the text.

Additionally, segments (bars) of a work field are designed with an option of their pressing by finger, so at pressing them pronounceable or recognizable text is attached to fragment (frame) text displayed in a current segment (bar) of a work field.

Additionally, the text displayed in segments (bars) of a work field is designed with an option of its tactile selecting and moving from a segment (bar) of one fragment (frame) to another.

Additionally, sub-button *"Move forward*/*back through frames"* for the frame starting from the second is designed in the form of two buttons *"Scroll forward*/*back"* and *"Select the look of transition between frames",* so when pressing by finger button *"Select the look of transition between frames"* a list of selection of transition mode is available which is designed as set of the following buttons: *"Save frame image as starting image of the next frame", "Erase frame image entirely and instantly", "Erase frame image entirely with delay", "Erase frame image entirely with eraser tool", "Erase frame image up to background* ", "*Erase part of frame image with eraser tool",* "*Erase selected elements of frame image", "Restore final image of the frame before the previous*", *"Move (rotate) the image opening blank space to create figures of a new frame and leaving in sight a small part of the previous frame image", "Minimize frame image placing the icon on the field of a new frame", "Shrink frame image and leave it on the field of a new frame*", "*Expand frame image and leave it on the field of a new frame".*

Methods of using the device for creation of multimedia presentations prototypes can be implemented in scenarios
"*TextlText_markup_into_frames*/*Sound*/*Sound_markup_into_frames*/*Graphics*", "*Text Text_markup_into_frames*/*Graphics*/*Sound*/*Sound_markup_into_frames*" and *"Sound*/*Text*/ *Text_markup_into_frames*/*Sound_markup_into_frames*/*Graphics".*

Methods of using the device for creation of multimedia presentations prototypes using personal computer device with keyboard, microphone, speaker and screen provided with sensor detecting the position of finger touch on display.

Control and selection of devices operation modes buttons and a work field of data processing are displayed on screens of the devices.

Methods of using the device includes entering text, sound and graphic symbols, their processing and composition into an audiovisual file of the multimedia presentation.

Method of using the device for creation of multimedia presentations prototypes in a scenario "*Text*/*Text_markup_into_frames*/*Sound*/*Sound_markup_into_frames*/*Graphics*" is done as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
   a) At importing text from external file - import text button;
   b) At text input from on-screen keyboard - show on-screen keyboard button;
   c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
7) Press sound editing button and switch the device to a sound editing mode of the presentation.
8) In sound editing mode select a source of sound so that depending on the source press the following buttons:
   a) At importing sound from external file - sound import from external file button, external file location button and launch/stop audio playback button;
   b) At recording sound from microphone - record sound from microphone button and launch/stop audio playback button.
9) At audio playback launch to display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
   b) Mutual visual border of text content of the presentation corresponding to splitting frames into the frames with marked up and not marked up sounding so that visual location of the border on screen stays constant as a result of move (scrolling) of frame bars in process of marking up.
10) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
11) Press graphic editing button and switch the device to Graphic editing of the presentation frames mode, thus image sheet (canvas), tools and palette for creating and editing graphic images is displayed in a work field starting from the first one.
12) In graphic editing mode press buttons corresponding to selected tools of graphics palette and create and edit graphic figures of the frame by touching the device screen in the area of sheet (canvas), thus record a visual representation of all actions for creating and editing figures.
13) In graphic editing mode the following buttons can be pressed:
   a) Turn on/turn off figures automatic recognition mode;
   b) Turn on/turn off text and/or audio narrator;
   c) Move forward/back through frames;
   d) Select the look of transition between frames.
14) Press demonstration of the presentation button and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button and convert the arrangement file of the presentation into a video-file without possibility of future editing text, sound or images of frames.

Method of using the device for creation of multimedia presentations prototypes in a scenario *"Text*/*Text_markup_into_frames*/*Graphics*/*Sound*/*Sound_markup_into_frames*" is done as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
   a) At importing text from external file - import text button;
   b) At text input from on-screen keyboard - show on-screen keyboard button;
   c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
7) Press graphic editing button and switch the device to Graphic editing of the presentation frames mode, thus image sheet (canvas), tools and palette for creating and editing graphic images is displayed in a work field starting from the first one.
8) In graphic editing mode press buttons corresponding to selected tools of graphics palette and create and edit graphic figures of the frame by touching the device screen in the area of sheet (canvas), thus record a visual representation of all actions for creating and editing figures.
9) In graphic editing mode the following buttons can be pressed:
   a) Turn on/turn off figures automatic recognition mode;
   b) Turn on/turn off text and/or audio narrator;
   c) Move forward/back through frames;
   d) Select the look of transition between frames.
10) Press sound editing button and switch the device to a sound editing mode of the presentation.
11) In sound editing mode select a source of sound so that depending on the source press the following buttons:
   a) At importing sound from external file - sound import from external file button, external file location button and launch/stop audio playback button;
   b) At recording sound from microphone - record sound from microphone button and launch/stop audio playback button.
12) At audio playback launch to display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
   b) Mutual visual border of text content of the presentation corresponding to splitting frames into the frames with marked up and not marked up sounding so that visual location of the border on screen stays constant as a result of move (scrolling) of frame bars in process of marking up.
13) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
14) Press demonstration of the presentation button and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button and convert the arrangement file of the presentation into a video-file without possibility of future editing text, sound or images of frames.

Method of using the device for creating multimedia presentations prototypes in a scenario "*Sound*/*Text*/*Text_markup_into_frames*/*Sound_markup_into_frames*/*Graphics*" is done as follows:
1) After launching switch the device to the presentation management mode.
2) Press Create presentation button and switch the device to creation of presentation mode.
3) Name the presentation in creation of presentation mode.
4) Press sound editing button and switch the device to a sound editing mode of the presentation.
5) In sound editing mode select a source of sound so that depending on the source press the following buttons:
   a) At importing sound from external file - sound import from external file button, external file location button and launch/stop audio playback button;
   b) At recording sound from microphone - record sound from microphone button and launch/stop audio playback button.
6) Press text editing button and switch the device to creation of text part of presentation mode.
7) In Creation of text part of presentation mode press the button corresponding to the way of the presentation text input in the device, as follows:
   a) At importing text from external file - import text button;
   b) At text input from on-screen keyboard - show on-screen keyboard button;
   c) At verbal text input with automatic recognition - verbal dictation with recognition button.
8) Enter text into the device, thus the entered text is placed in a work field of the device screen.
9) Insert markers of fragment (frame) text edge, in order to press set the marker of frame text edge button and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
10) Press sound editing button and switch the device to a sound editing mode of the presentation, thus display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
   b) Mutual visual border of text content of the presentation corresponding to splitting frames into the frames with marked up and not marked up sounding so that visual location of the border on screen stays constant as a result of move (scrolling) of frame bars in process of marking up.
11) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
12) Press graphic editing button and switch the device to Graphic editing of the presentation frames mode, thus image sheet (canvas), tools and palette for creating and editing graphic images is displayed in a work field starting from the first one.
13) In graphic editing mode press buttons corresponding to selected tools of graphics palette and create and edit graphic figures of the frame by touching the device screen in the area of sheet (canvas), thus record a visual representation of all actions for creating and editing figures.
14) In graphic editing mode the following buttons can be pressed:
   a) Turn on/turn off figures automatic recognition mode;
   b) Turn on/turn off text and/or audio narrator;
   c) Move forward/back through frames;
   d) Select the look of transition between frames.
15) Press demonstration of the presentation button and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker playback of audio track of the presentation and on the screen the time scaled visual representation of creating and editing graphic figures of frames in their sequence and record the resulting mix of sound and animation into an arrangement audiovisual file of the presentation.
16) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button and convert the arrangement file of the presentation into a video-file without possibility of future editing text, sound or images of frames.

### Description of the drawings

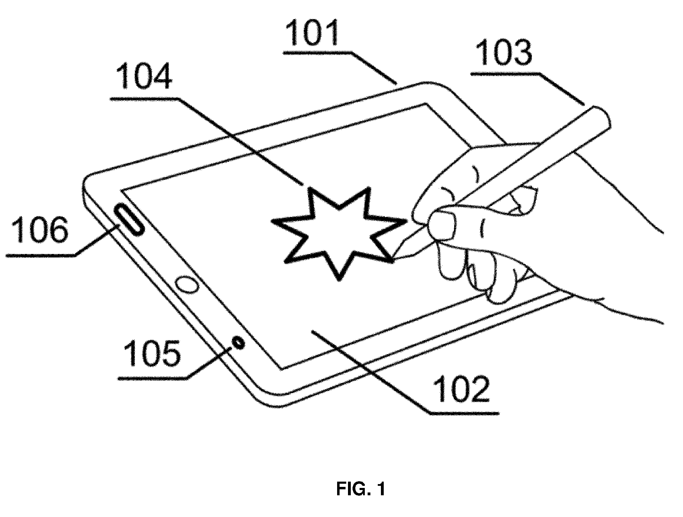

FIG. 1 illustrates implementation of method of creating multimedia-presentations prototypes and the device for creating multimedia-presentations prototypes where:
   101 - device;
   102 - screen with a sensor detecting the position of finger touch;
   103 - stylus for screen interaction;
   104 - graphic images drawn and displayed on screen;
   105 - device microphone;
   106 - device speaker.

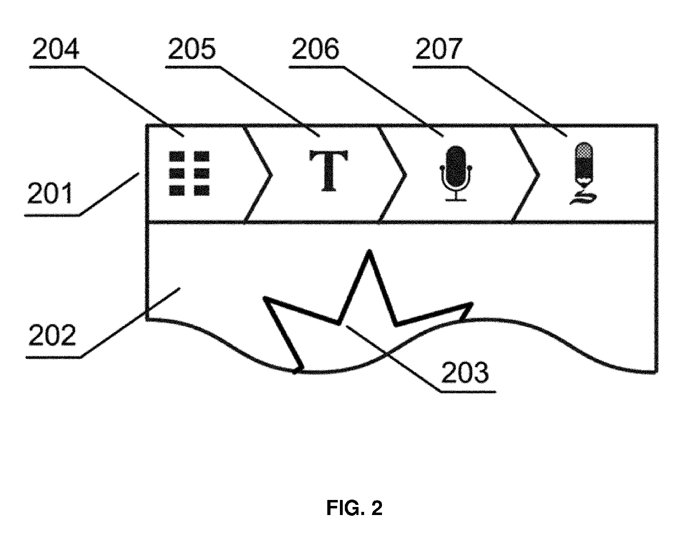

FIG. **2** illustrates screen layout of the device in different modes, where:
   201 - device mode of operations selection panel;
   202 - work field of the selected mode;
   203 - graphical or text content in a work field;
   204 - field-button of mode *"Presentations management*";
   205 - field-button of mode "*Text editing*";
   206 - field-button of mode "*sound editing*";
   207 - field-button of mode *"Graphic editing*".

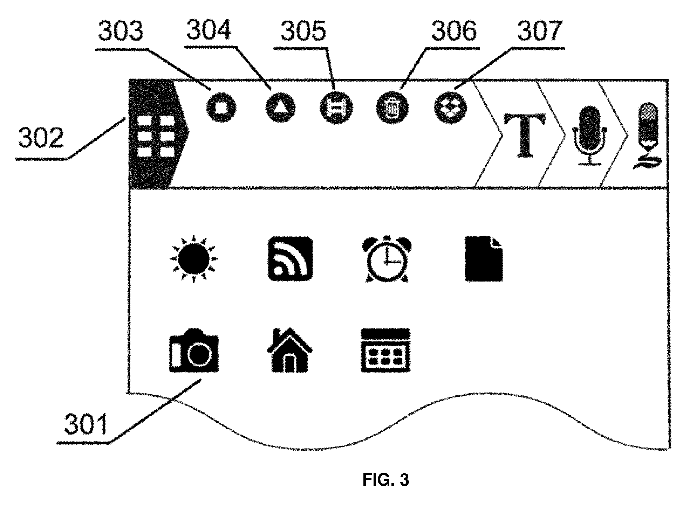

FIG. **3** illustrates screen of the device in *"Presentations management* " mode, where:
   301 - icons (final drawings) of the presentations prototypes in a work field;
   302 - minimized button-field of the current mode;
   303 - button *"Create presentation*";
   304 - button *"Open presentation for editing*";
   305 - button "*Launch demonstration of presentation*";
   306 - button "*Delete presentation*";
   307 - button *"Save presentation as*".

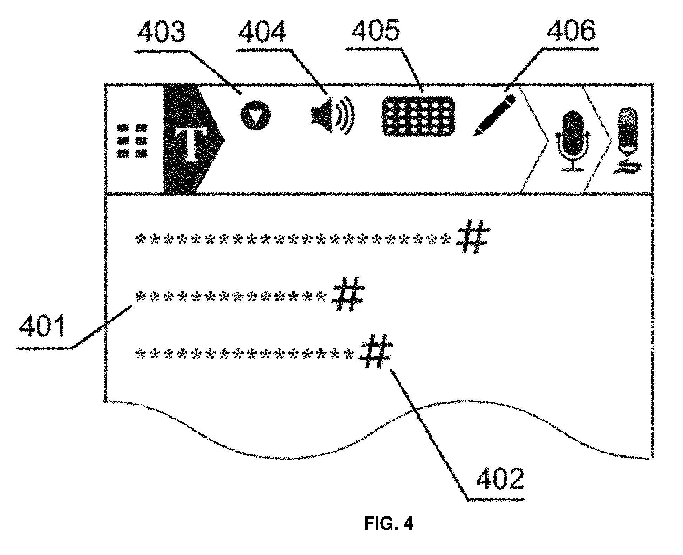

FIG. **4** illustrates screen of the device in "*Text editing"* mode, where:
   401 - text of the prototype in a work field of mode;
   402 - markers of frames text edges;
   403 - button *"Import text* ";
   404 - button "*Verbal dictation of text with recognition";*
   405 - button "*Enter text from on-screen keyboard*";
   406 - button *"Insert marker of frames text edges*".

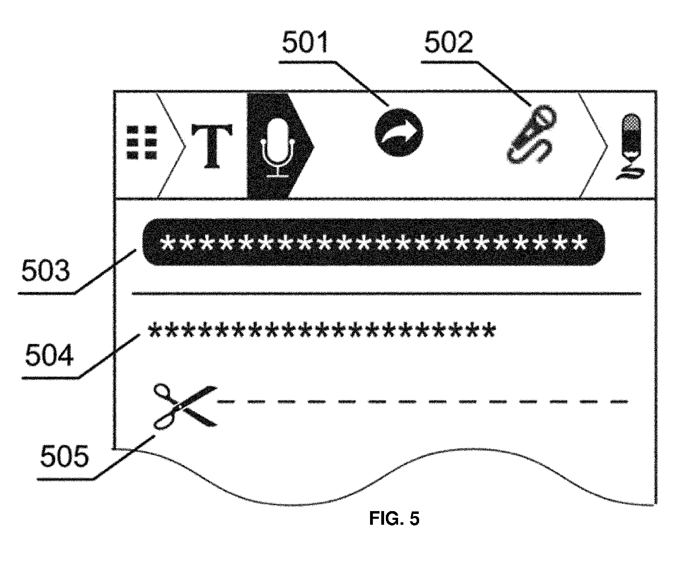

FIG. **5** illustrates screen of the device in "*sound editing"* mode, where:
   501 - button *"Import soarnd from file and markup sound into words*";
   502 - button *"Record soarnd from microphone and markup sound into words*";
   503 - text of part of the presentation for which audio track is already marked up into frames;
   504 - text of part of the presentation for which audio track is not marked up into frames yet;
   505 - process visualization and animation and markup edges of audio track.

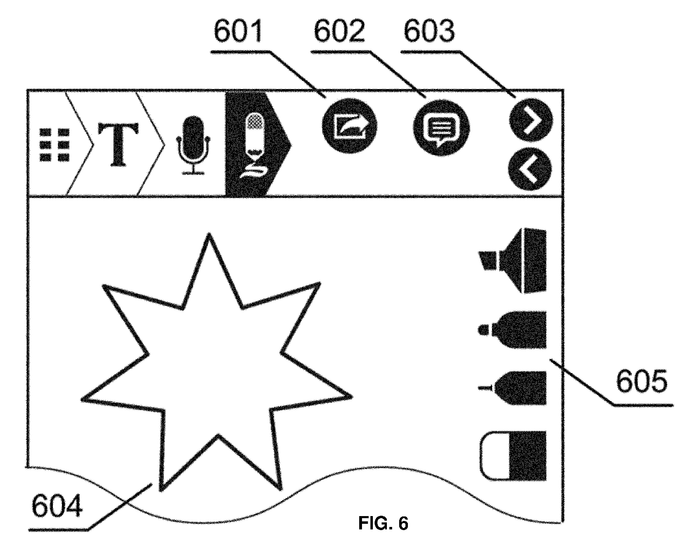

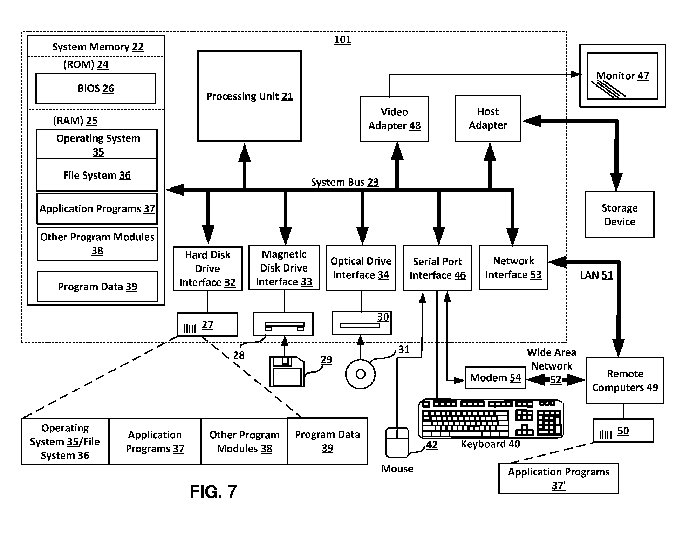

FIG. **6** illustrates screen of the device in *"Graphic editing"* mode, where:
   601 - button "*turn on*/*turn off figures automatic recognition mode*";
   602 - button "*Turn on*/*turn off text narrator*";
   603 - button *"Move forward*/*back through frames*";
   604 - graphic images being created;
   605 - graphic tools and palette.

### Description of embodiment

The claimed invention can be embodied as follows.

A user must create a prototype (light version) of multimedia presentation for using it for personal or professional purposes.

For example, to show a viewer of the presentation a direction to an unknown place, to create a simple garden furniture assembly instruction or to get the offers on developing business process of company division across to work colleagues.

Multimedia-presentation must consist of a video track in the form of graphic images (screens, frames, scenes) sequence and an audio track with voice dubbing of the presentation text going along with the video sequence.

A base for creating an audio track is a text of the presentation prepared in advance, as well resultant in stenographing and editing of unprocessed and unprepared speech.

Text of the presentation and the multimedia-presentation itself consist of elementary indivisible substantial fragments sequence in equivalent to creation technology of television programs named "*frames*".

Each frame complies with its text (a fragment of the presentation general text), its audio track (fragment of the presentation general track) and its graphic images in the form of visualization process of creating and editing graphic images.

For the right perception of the presentation content, the displayed on screen record of process of creating and editing frame images must be in time with text synchronization of the current frame.

In the claimed invention as opposed to the known analogues a base for multimedia presentation creation is an audio track with the record of synchronized text of the presentation.

The reason of that is that linear compression or stretching of record playback speed of voice synchronization leads to essential degradation of quality perception of the synchronized text and the presentation in general by viewers.

At the same time linear compression or stretching of playback speed record of creating and editing graphic images doesn't lead to degradation of quality perception.

When using manually created drafts, schemes and drawings as graphic images of the presentation the playback of record of their creating and editing process can be sped up or slowed down in wide time frames without losing quality perception of visual content.

The synchronization of audio and video track is made by linear compression or stretching playback speed record of creating and editing graphic images until the playback duration of the frame visual content and the duration of its sound matches.

The claimed invention is designed for using on portable personal computer devices (101) with touch screen (102) and oriented toward visually displayed and visually controlled process of creating and editing the presentation content.

Operations with touch screen not requiring high accuracy of contact point positioning can be made by fingers. Operations requiring enhanced accuracy of contact point positioning, e.g. drawing, is made by stylus (103).

The markers of text markup (402) are used for visual splitting of the presentation text and consequently the presentation itself into the frames.

In the claimed invention there are three scenarios of methods of creating multimedia presentations prototypes named in accordance with the sequence of the actions taken:
- "*Text*/*Text_markup_into_frames*/*Sound*/*Sound_markup_into_frames*/*Graphics*";
- "*Text*/*Text_markup_into_frames*/*Graphics*/*Sound*/*Sound_markup_into_frames*";
- "*Sound*/*Text*/*Text_markup_into_frames*/*Sound_markup_into_frames*/*Graphics*".

The method of creating of multimedia presentations prototypes in a scenario "*Text*/*Text_markup_into_frames*/*Sound*/*Sound_markup_into_frames*/*Graphics*" includes determination of frames order, their textual and visual content and the order of transition between frames, preparation and mutual composition of text, visual content and audio track of multimedia presentation into the audio-video file by using personal computer device (smartphone, tablet, laptop, PC).

In this scenario preparation and mutual arrangement of text, visual content and audio track is done as follows:
1) To prepare a single coherent presentation text and enter it into the device (101).
2) The presentation text is split into fragments corresponding to the presentation frames, placing the marker of the text markup into frames between all the neighbouring frames (402).
3) To record (load) an audio track with verbal voice content of the presentation.
4) To split the audio track with verbal voice content of the presentation into frames.
5) To create visual imagery of frames and for each frame of the presentation:
   - to create and edit graphic figures of the frame;
   - to record visual representation of all actions of creating and editing figures.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arrangement file of the presentation in a format allowing future editing of text, sound and visual imagery of frames in the next work session;
   c) To convert the arrangement file of the presentation into a video-file without possibility of future editing of text, sound or images of frames.

The method of creating of multimedia presentations prototypes in a scenario *"Text*/ "*Text*/*Text_markup_into_frames*/*Sound*/*Sound_markup_into_frames*/*Graphics*" includes determination of frames order, their textual and visual content and the order of transition between frames, preparation and mutual composition of text, visual content and audio track of multimedia presentation into the audio-video file by using personal computer device (smartphone, tablet, laptop, PC).

In this scenario preparation and mutual arrangement of text, visual content and audio track is done as follows:
1) To prepare a single coherent presentation text and enter it into the device (101).
2) The presentation text is split into fragments corresponding to the presentation frames, placing the marker of the text markup into frames between all the neighbouring frames (402).
3) To create visual imagery of frames and for each frame of the presentation:
   - to create and edit graphic figures of the frame;
   - to record visual representation of all actions of creating and editing figures.
4) To record (load) an audio track with verbal voice content of the presentation.
5) To split the audio track with verbal voice content of the presentation into frames.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arrangement file of the presentation in a format allowing future editing of text, sound and visual imagery of frames in the next work session;
   c) To convert the arrangement file of the presentation into a video-file without possibility of future editing of text, sound or images of frames.

The method of creating of multimedia presentations prototypes in a scenario "*sound*/ *"Text*/*Text_markup_into_frames*/*Sound_markup_into_frames*/*Graphics*" includes determination of frames order, their textual and visual content and the order of transition between frames, preparation and mutual composition of text, visual content and audio track of multimedia presentation into the audio-video file by using personal computer device (smartphone, tablet, laptop, PC).

In this scenario preparation and mutual arrangement of text, visual content and audio track is done as follows:
1) To record (load) an audio track with verbal voice content of the presentation.
2) To prepare a single coherent presentation text and enter it into the device (101).
3) The presentation text is split into fragments corresponding to the presentation frames, placing the marker of the text markup into frames between all the neighbouring frames (402).
4) To split the audio track with verbal voice content of the presentation into frames.
5) To create visual imagery of frames and for each frame of the presentation:
   - to create and edit graphic figures of the frame;
   - to record visual representation of all actions of creating and editing figures.
6) To arrange the presentation prototype, and with that:
   a) To prepare its own arrangement file for each frame, and with that:
      - to determine the time of frame sounding on the audio track;
      - to make uniform time scaling (shrink/expand) of visual representation of creating and editing graphic figures of the frame visual imagery until the duration of the frame visual representation and the duration of its sound matches;
      - to determine data of frame visualization (aspect ratio, resolution, color, transparency, FPS, etc.);
      - to playback simultaneously the frame audio track and the time scaled visual representation of creating and editing graphic figures of the frame and to record the resulting mix of sound and animation into an arrangement file of the frame;
      - to playback the arrangement file of the frame on screen, evaluate it. If the result is positive - to save the file, if it's negative - to move over to editing text, sound, frame figures and the repeated arrangement of that frame;
   b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
   a) To make the required correction of text, sound or visual imagery of frames in that particular work session and repeatedly arrange the presentation prototype;
   b) To save the arrangement file of the presentation in a format allowing future editing of text, sound and visual imagery of frames in the next work session;
   c) To convert the arrangement file of the presentation into a video-file without possibility of future editing of text, sound or images of frames.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") the audio track of verbal voice content of the presentation is split into frames as follows:
1) To display:
   a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
   b) Mutual visual border of text content of the presentation corresponding to splitting frames into the frames with marked up and not marked up sounding so that visual location of the border on screen stays constant as a result of move (scrolling) of frame bars in process of marking up.
2) To listen to sounding and when synchronization of one frame ends and synchronization of another frame begins:
   a) In case of manual markup to insert a marker of audio track markup, for example by pressing on image of text bar of the next frame and visually animating set up of the markup, e.g. by changing look of bar edge;
   b) In case of automatic speech recognition, automatic matching recognized words to texts of frames and automatic markup of audio track - to check accuracy of automatic sounding markup and if necessary to correct the markup.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") when creating and editing graphic figures of frame the following operations or their combinations are performed:
- to load graphic figures and images from external source;
- to record video/take a photo by the camera integrated into the device and to insert photos and videos into visual imagery of frames;
- automatically detect drawn figures and/or lines and correct their geometry, and if the suggested version is approved then delete originally created figures and/or lines, replace with the edited figures and/or lines, and the duration of creating and editing graphic figures is equal to duration of creating and editing originally created graphic figures and/or lines, excluding actual time for automatic correction and reviewing suggested versions;
- to attach indicating (connective) lines and captions to figures and automatically move matching lines and text along with figures when moving them in course of editing;
- to set a method of transition between visual imageries of two adjacent frames;
- to playback a fragment of audio track of current frame in order to check creation of visual imagery of frame, drawing and editing graphic figures;
- to perform test animation of already created part of visual imagery of frame in order to check creation of visual imagery of frame;

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*" and
"*Sound*/*Text*/*Text_markup_into_frames*/*Sound_markup_into_frames*/*Graphics*") when creating arrangement file of frame for synchronization of animation with sounding, the time of visual representation of creating and editing graphic figures of the frame visual imagery is determined by one of the following ways:
a) From the start marker of frame sounding on audio track to the end marker of frame sounding (including time of pauses before the first word and after the last one);
b) From the start of actual sounding of the first word of frame text to the end of sounding of the last word of frame text (excluding time of pauses before the first word and after the last one);
Thus in both ways a) and b) the additional delays (pauses) can be inserted before the start of sounding of the first word of the first frame and after ending of sounding of the last word of the last frame.

Additionally in all three above mentioned scenarios
(*"Text*/*Text_markup_into_frames*/*Sound*/*Sound_markup_into_frames*/*Graphics*",
"*Text*/*Text_markup_into_frames*/*Graphics*/*Sound*/*Sound_markup_into_frames*"/*Graphics*/*Sound*/*Sound_markup_into_frames*" and
"*Sound*/*Text*/*Text_markup_into_frames*/*Sound_markup_into_frames*/*Graphics*") the correction of text, sound and visual imagery of frames is made as follows:
1) If there is a visual imagery in the original frame when splitting the original frame into two new frames:
   - to split text of the frame by the text markup marker into two fragments corresponding to two new frames;
   - to choose which one of two new created frames will have the visual imagery of the original frame;
   - to create visual imagery for the second frame created.
2) When integrating two adjacent original frames into one new:
   a) If there is no visual imagery in frames - to delete markers of text markup and audio track of frames;
   b) If there is visual imagery only in one of the integrated frames - to delete marker of text markup and audio track of frames and to attach visual imagery to the resulting integrated frame;
   c) If there are visual imageries in both integrated frames:
      - to delete markers of text markup and audio track of frames;
      - to create the resulting audio track by consecutive connection of two original audio tracks keeping their original sequence;
      - to create the resulting visual imagery by consecutive connection of two original visual imageries keeping their original sequence and rate of timescale of the original frames.

Additionally in all three above mentioned scenarios
"*Text*/*Text_markup_into_frames*/*Sound*/*Sound_markup_into_frames*/*Graphics*",
"*Text*/*Text_markup_into_frames*/*Graphics*/*Sound*/*Sound_markup_into_frames"* and
"*Sound*/*Text*/*Text_markup_into_frames*/*Sound_markup_into_frames*/*Graphics*") markup of audio track of the presentation into frames can be corrected as follows:
- to determine two adjacent frames and location of marker of audio track markup to be corrected;
- to display an image of audio track with sounding end marker;
- to playback continuous consistent sounding of both frames and simultaneously visually display a time line with the locator of the current position of marker of audio track markup;
- to move the locator of marker of audio track markup on time line right or left after listening to end of one frame and beginning of the following one;
- to check the result after moving - to playback audio track from time mark N seconds to a new position of marker of audio track markup where N is from 0 to 4 seconds.

Additionally in all three above mentioned scenarios
(*"Text*/*Text_markup_into_frames*/*Sound*/*Sound_markup_into_frames*/*Graphics*",
"*Text*/*Text_markup-_into_frames*/*Graphics*/*Sound*/*Sound_markup_into_frames*" and
*"Sound*/*Text*/*Text_markup_into_frames*/*Sound_markup_into_frames*/*Graphics*") a way of transition between visual imageries of two adjacent frames when opening (creating) a new frame is done in the following ways or their combination:
- to save the image of the previous frame without changes as a start image of a new frame;
- to erase the image of the previous frame completely;
- to erase the entire image of the previous frame by moving eraser tool on screen;
- to erase the image of the previous frame up to background (background image);
- to erase a part of screen field by eraser tool (horizontally);
- to erase chosen elements of the image of the previous frame (to choose by elements);
- to restore a final image of the frame before the previous one (to cancel all changes of the image made on the previous frame);
- to move (rotate) visual field (virtual screen sheet) of the previous frame, open a clean space for creating figures of a new frame and leave in sight a small part of the image of the previous frame;
- to minimize into an icon the resulting image of the previous frame placing the icon on the screen field of a new frame (as a reminder of the previous frame);
- to minimize the resulting image of the previous frame and leave it on the screen field of a new frame (for drawing a new image around the previous one);
- to extend the resulting image of the previous frame (a part of the image is possibly out of the frame) and leave the part apparent within the frame edges on the screen field of a new frame (for drawing a new image inside the part of the previous one).

For creating multimedia presentations prototypes can be used the devices (101) in the form of portable personal computer device (smartphone, tablet, laptop).

These devices have a screen (102) provided with a sensor detecting the position of finger touch or stylus (103) to the screen.

The devices have built-in or external microphone (105) for sound input and built-in or external speakers (106) for sound output.

Text content can be inserted into the devices by using on-screen or physical keyboard or by verbal dictation of text with its following automatic recognition.

The screen has a sensor detecting the position of finger touch, the operation mode selection panel (201) of the device can be displayed on the screen and when touching different areas of the selection panel the device will switch to the corresponding operation modes.

Operation mode selection panel of the device can be designed in the form of a bar visually split into field-buttons with symbolic images (icons) of operation modes of the device.

When pressing on field-buttons they expand lengthwise (unfold) and sub-buttons with captions of operation modes of the device will appear.

In the claimed invention the devices can be designed in *«Mini»* and *«**Screen**»* versions.

A device for creating multimedia presentations prototypes in *«**Mini**»* version is designed with the following options:
- when displaying text on screen and user's touching the displayed text to process positions of finger touch as a command of location of the displayed text edges splitting into text fragments (402) and to form data structures in the device memory corresponding to the specified fragments (frames);
- to split the recorded audio track into audio slices and to connect them with the text fragments (frames);
- to record a process of drawing by user's finger touch on the display and connect them with the text fragments (frames);
- to scale (shrink/expand) proportionally on the display playback time of drawing process by user's finger touch;
- to display on screen the recorded process of figures drawing corresponding to the matching text fragments (frames) on a time scale equal to sound duration of the audio slices corresponding to these text fragments (frames) with simultaneous playback of these audio fragments.

Additionally data processing unit is designed with the option to perform the following operations or their combinations:
- automatically detect verbal text pronunciation;
- automatically divide the recorded audio track into audio slices and connect these audio slices with the matching text fragments (frames);
- automatically detect drawn graphic figures and chose their smoothed and/or regular-shaped equivalents from the image library.

While designing the device for creating multimedia presentations prototypes in «***Screen**»* version the device mode of operations selection panel (201) is located in upper part of the screen across the entire width and is provided with field-buttons *"Presentations management"* (204), *"Text editing"* (205), "*sound editing"* (206), *"Graphic editing"* (207). A work field of active operation mode (202) is displayed under the selection panel on the device screen, thus at launching (startup) of the device if the processed multimedia presentations prototype is not chosen, the device switches to "*Presentation management* " mode; thus icons (final drawings) available for review or editing of the presentations prototypes with captions (301) are displayed in a work field. And if the prototype is chosen at launch the device switches to "*Text editing"* mode of the chosen prototype, thus the text of prototype (401) is displayed in a work field.

Additionally field-button "*Presentation management* " (204) after it's opened (pressed) contains sub-buttons *"Create presentation"* (303), *"Open presentation for editing"* (304), "*Launch demonstration of presentation"* (305), "*Delete presentation"* (306), *"Save presentation as"* (307), thus the icons (final drawings) of presentation prototypes with captions (301) are displayed in a work field.

Additionally field-button "*Text editing"* after it's opened (pressed) contains sub-buttons "*Text import"* (403), "*Text verbal dictation with recognition"* (404), "*Text input from on-screen keyboard"* (405), *"Insert the marker of the frame text edge"* (406), thus the text of the presentation prototype (401) is displayed in a work field.

Additionally field-button "*Sound editing"* after it's opened (pressed) contains sub-buttons *"Import sound from file and markup sound into words"* (501), "*Record sound from microphone and markup sound into words"* (502), thus the text of the prototype visually split into segments (bars) corresponding to fragments (frames) of the presentation is displayed in a work field, so that the text part of the presentation for which an audio track is already marked up into fragments (frames) (503) visually different from the part for which markup is not done yet (504).

Additionally, field-button *"Graphic editing"* after it's opened (pressed) contains sub-buttons "*Turn on*/*turn off figures automatic recognition mode*" (601), "*Turn on*/*turn off text narrator"* (602), *"Move forward*/*back through frames"* (603), thus image sheet (canvas), tools and palette (605) for creating and editing graphic images of the current fragment (frame) (604) is displayed in a work field.

Additionally the narrator mode can be designed in the form of text narrator with showing text of the frame for 1-3 seconds and/or voice narrator with synchronization the audio track of the current frame.

Additionally, if at opening (pressing) "*sound editing"* button there are graphic images of the presentation fragments (frames), the icons of graphic images corresponding to these fragments (frames) are displayed in segments (bars) of a work field along with the text.

Additionally, segments (bars) of a work field are designed with an option of their pressing by finger, so at pressing them pronounceable or recognizable text is attached to fragment (frame) text displayed in a current segment (bar) of a work field.

Additionally, text displayed in segments (bars) of a work field is designed with an option of its tactile selecting and moving from a segment (bar) of one fragment (frame) to another.

Additionally, sub-button *"Move forward*/*back through frames"* for the frame starting from the second is designed in the form of two buttons *"Scroll forward*/*back"* and *"Select the look of transition between frames",* so when pressing by finger button *"Select the look of transition between frames"* a list of selection of transition mode is available which is designed as set of the following buttons: *"Save frame image as starting image of the next frame", "Erase frame image entirely and instantly", "Erase frame image entirely with delay", "Erase frame image entirely with eraser tool", "Erase frame image up to background*", "*Erase part of frame image with eraser tool",* "*Erase selected elements of frame image", "Restore final image of the frame before the previous*", *"Move (rotate) the image opening blank space to create figures of a new frame and leaving in sight a small part of the previous frame image", "Minimize frame image placing the icon on the field of a new frame", "Shrink frame image and leave it on the field of a new frame*", "*Expand frame image and leave it on the field of a new frame".*

The methods of using the personal computer device (101) for creating multimedia presentation prototypes with keyboard, microphone (105), speaker (106) and screen (102), provided with sensor detecting the position of finger touch on display.

Control and selection of devices operation modes buttons (201) and a work field for data processing (202) are displayed on screens of the devices.

Methods of using the device includes entering text, sound and graphic symbols, their processing and composition into an audiovisual file of the multimedia presentation.

Methods of using the device for creation of multimedia presentations prototypes can be performed in three scenarios named accordingly to the implemented actions sequence:
- "*Text*/*Text_markup_into_frames*/*Sound*/*Sound_markup_into_frames*/*Graphics*" ;
- "*Text*/*Text_markup_into_frames*/*Graphics*/*Sound*/*Sound_markup_into_frames*/*Graphics*";
- "*Sound*/*Text*/*Text_markup_into_frames*/*Sound_markup_into_frames*/*Graphics*".

Method of using the device for creation of multimedia presentations prototypes in a scenario "*Text*/*Text_markup_into_frames*/*Sound*/*Sound_markup_into_frames*/*Graphics*" is done as follows:
1) After launching switch the device to the presentation management mode.
2) Press Create presentation button (303) and switch the device to creation of presentation mode.
3) Name the presentation in creation of presentation mode, press text editing button (205) and switch the device to creation of text part of presentation mode.
4) In Creation of text part of presentation mode press the button corresponding to the way of the presentation text input in the device, as follows:
   a) At importing text from external file - import text button (403);
   b) At text input from on-screen keyboard - show on-screen keyboard button (405);
   c) At verbal text input with automatic recognition - verbal dictation with recognition button (404).
5) Enter text into the device, thus the entered text is placed in a work field (202) of the device screen.
6) Insert markers of fragment (frame) (402) text edge, in order to press set the marker of frame text edge button (406) and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
7) Press sound editing button (206) and switch the device to a sound editing mode of the presentation.
8) In sound editing mode select a source of sound so that depending on the source press the following buttons:
   a) At importing sound from external file - sound import from external file button (501), external file location button and launch/stop audio playback button;
   b) At recording sound from microphone - record sound from microphone button (502) and launch/stop audio playback button.
9) At audio playback launch to display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) (503) is visually different from presentation of text, bars or edges of bars for the frames for which the audio track has not been marked up yet (504);
   b) Mutual visual border of text content of the presentation corresponding to splitting frames into the frames with marked up and not marked up sounding (505) so that visual location of the border on screen stays constant as a result of move (scrolling) of frame bars in process of marking up.
10) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
11) Press graphic editing button (207) and switch the device to Graphic editing of the presentation frames mode, thus image sheet (canvas), tools and palette (605) for creating and editing graphic images of the frame (604) is displayed in a work field starting from the first one.
12) In graphic editing mode press buttons corresponding to selected tools of graphics palette and create and edit graphic figures of the frame by touching the device screen in the area of sheet (canvas), thus record a visual representation of all actions for creating and editing figures.
13) In graphic editing mode the following buttons can be pressed:
   a) Turn on/turn off figures automatic recognition mode (601);
   b) Turn on/turn off text and/or audio narrator (602);
   c) Move forward/back through frames (603);
   d) Select the look of transition between frames.
14) Press demonstration of the presentation button (305) and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker (106) playback of the audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button (307) and convert the arrangement file of the presentation into a video-file without possibility of future editing text, sound or images of frames.

Method of using the device for creation of multimedia presentations prototypes in a scenario *"Text*/*Text_markup_into_frames*/*Graphics*/*Sound*/*Sound_markup_into_frames*" is done as follows:
1) After launching switch the device to the presentation management mode.
2) Press Create presentation button (303) and switch the device to creation of presentation mode.
3) Name the presentation in creation of presentation mode, press text editing button (205) and switch the device to creation of text part of presentation mode.
4) In Creation of text part of presentation mode press the button corresponding to the way of the presentation text input in the device, as follows:
   a) At importing text from external file - import text button (403);
   b) At text input from on-screen keyboard - show on-screen keyboard button (405);
   c) At verbal text input with automatic recognition - verbal dictation with recognition button (404).
5) Enter text into the device, thus the entered text is placed in a work field of the device screen.
6) Insert markers of fragment (frame) text edge, in order to press set the marker of frame text edge button (406) and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
7) Press graphic editing button (207) and switch the device to Graphic editing of the presentation frames mode, thus image sheet (canvas), tools and palette (605) for creating and editing graphic images of the frame is displayed in a work field starting from the first one.
8) In graphic editing mode press buttons corresponding to selected tools of graphics palette and create and edit graphic figures of the frame (604) by touching the device screen in the area of sheet (canvas), thus record a visual representation of all actions for creating and editing figures.
9) In graphic editing mode the following buttons can be pressed:
   a) Turn on/turn off figures automatic recognition mode (601);
   b) Turn on/turn off text and/or audio narrator (602);
   c) Move forward/back through frames (603);
   d) Select the look of transition between frames.
10) Press sound editing button (206) and switch the device to a sound editing mode of the presentation.
11) In sound editing mode select a source of sound so that depending on the source press the following buttons:
   a) At importing sound from external file - sound import from external file button (501), external file location button and launch/stop audio playback button;
   b) At recording sound from microphone - record sound from microphone button (502) and launch/stop audio playback button.
12) At audio playback launch to display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) (503) is visually different from presentation of text, bars or edges of bars for the frames for which the audio track has not been marked up yet (504);
   b) Mutual visual border of text content of the presentation (505) corresponding to splitting frames into the frames with marked up and not marked up sounding so that visual location of the border on screen stays constant as a result of move (scrolling) of frame bars in process of marking up.
13) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
14) Press demonstration of the presentation button (305) and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker (106) playback of the audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button (307) and convert the arrangement file of the presentation into a video-file without possibility of future editing text, sound or images of frames.

Method of using the device for creating multimedia presentations prototypes in a scenario "Sound/*Text*/*Text_markup_into_frames*/*Sound_markup_into_frames*/*Graphics*" is done as follows:
1) After launching switch the device to the presentation management mode.
2) Press Create presentation button (303) and switch the device to creation of presentation mode.
3) Name the presentation in creation of presentation mode.
4) Press sound editing button (206) and switch the device to a sound editing mode of the presentation.
5) In sound editing mode select a source of sound so that depending on the source press the following buttons:
   a) At importing sound from external file - sound import from external file button (501), external file location button and launch/stop audio playback button;
   b) At recording sound from microphone - record sound from microphone button (502) and launch/stop audio playback button.
6) Press text editing button (205) and switch the device to creation of text part of presentation mode.
7) In Creation of text part of presentation mode press the button corresponding to the way of the presentation text input in the device, as follows:
   a) At importing text from external file - import text button (403);
   b) At text input from on-screen keyboard - show on-screen keyboard button (405);
   c) At verbal text input with automatic recognition - verbal dictation with recognition button (404).
8) Enter text into the device, thus the entered text is placed in a work field of the device screen.
9) Insert markers of fragment (frame) text edge (402), in order to press set the marker of frame text edge button (406) and after that press:
   a) At importing text from external file or entering text from on-screen keyboard - on the text displayed in a work field inside the markers of frames text edges;
   b) At verbal text entering with automatic words recognition and placing markers of words edges - on markers of words edges inside the markers of frames text edges.
10) Press sound editing button (206) and switch the device to a sound editing mode of the presentation, thus display on screen:
   a) Text of frames sounding (synchronized) at that particular moment visually presented as segments (bars) corresponding to the frames of the presentation, so visual representation of text, bars or edges of for the frames for which the audio track has already been marked up into fragments (frames) (503) is visually different from presentation of text, bars or edges of bars for the frames for which the audio track has not been marked up yet (504);
   b) Mutual visual border of text content of the presentation (505) corresponding to splitting frames into the frames with marked up and not marked up sounding so that visual location of the border on screen stays constant as a result of move (scrolling) of frame bars in process of marking up.
11) At audio playback listen to sounding and when synchronization of one frame ends and synchronization of another frame begins:
   a) At manual markup - press on image of text bar of the next frame and insert the displayed marker of audio track markup, thus additionally visually animate setup of the markup, e.g. by changing look of bar edge;
   b) At automatic speech recognition, automatic matching recognized words to texts of frames and automatic markup of audio track - to check accuracy of automatic sounding markup, and if an error of recognition and markup is detected - press launch/stop audio playback button and correct the markup.
12) Press graphic editing button (207) and switch the device to Graphic editing of the presentation frames mode, thus image sheet (canvas), tools and palette (605) for creating and editing graphic images of the frame (604) is displayed in a work field starting from the first one.
13) In graphic editing mode press buttons corresponding to selected tools of graphics palette and create and edit graphic figures of the frame by touching the device screen in the area of sheet (canvas), thus record a visual representation of all actions for creating and editing figures.
14) In graphic editing mode the following buttons can be pressed:
   a) Turn on/turn off figures automatic recognition mode (601);
   b) Turn on/turn off text and/or audio narrator (602);
   c) Move forward/back through frames (603);
   d) Select the look of transition between frames.
15) Press demonstration of the presentation button (305) and switch the device to arrangement and demonstration of the presentation mode, thus:
   a) Determine time of frame sounding at audio track for each frame;
   b) Make uniform time scaling (shrink/expand) of visual representation of creating and editing graphic figures of visual imagery of each frame until the duration of the frame visual representation and the duration of its sound matches;
   c) Determine data of frame visualization (aspect ratio, resolution, color, transparency, FPS, etc.);
   d) Launch via speaker (106) playback of the audio track of the presentation and on the screen the time scaled visual representation of creating and editing graphic figures of frames in their sequence and record the resulting mix of sound and animation into an arrangement audiovisual file of the presentation.
16) Review demonstration of the presentation, evaluate its level of completeness and accordance to the purposes of the presentation. According to the results of evaluation:
   a) Press the buttons of text, sound or graphic editing and move over to text, sound or graphic correction in this particular work session and to repeated arrangement of the presentation;
   b) Press Save work version of file button and save the arrangement file of the presentation in format allowing future editing of text, sound and visual imagery of frames in the next work session;
   c) Press Save as video file button (307) and convert the arrangement file of the presentation into a video-file without possibility of future editing text, sound or images of frames.

The claimed invention allows diminishing high manpower effort and complexity of creating multimedia presentation for personal and professional use.

## Claims

1. The method of creating multimedia presentations prototypes includes determination of frames order, their textual and visual content and the order of transition between frames, preparation and mutual composition of text, visual content and audio track of multimedia presentation into audio-video file by using personal computer device (smartphone, tablet, laptop, PC), **deviates** with preparation and mutual arrangement of text, visual content and audio track is done as follows:
1) To prepare a single coherent presentation text and enter it into the device.
2) The presentation text is split into fragments corresponding to the presentation frames, placing the marker of the text markup into frames between all the neighbouring frames.
3) To record (load) an audio track with verbal voice content of the presentation.
4) To split the audio track with verbal voice content of the presentation into frames.
5) To create visual imagery of frames and for each frame of the presentation:
- to create and edit graphic figures of the frame;
- to record visual representation of all actions of creating and editing figures.
6) To arrange the presentation prototype, and with that:
a) To prepare its own arrangement file for each frame, and with that:
- to determine the time of frame sounding on the audio track;
- to make uniform time scaling (shrink/expand) of visual representation of creating and editing graphic figures of the frame visual imagery until the duration of the frame visual representation and the duration of its sound matches;
- to determine data of frame visualization (aspect ratio, resolution, color, transparency, FPS, etc.);
- to playback simultaneously the frame audio track and the time scaled visual representation of creating and editing graphic figures of the frame and to record the resulting mix of sound and animation into an arrangement file of the frame;
- to playback the arrangement file of the frame on screen, evaluate it. If the result is positive - to save the file, if it's negative - to move over to editing text, sound, frame figures and the repeated arrangement of that frame;
b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
a) To make the required correction of text, sound or visual imagery of frames in that particular work session and repeatedly arrange the presentation prototype;
b) To save the arrangement file of the presentation in a format allowing future editing of text, sound and visual imagery of frames in the next work session;
c) To convert the arrangement file of the presentation into a video-file without possibility of future editing text, sound or images of frames.

2. The method of creating multimedia presentations prototypes includes determination of frames order, their textual and visual content and the order of transition between frames, preparation and mutual composition of text, visual content and audio track of multimedia presentation into audio-video file by using personal computer device (smartphone, tablet, laptop, PC), **deviates** with preparation and mutual arrangement of text, visual content and audio track is done as follows:
1) To prepare a single coherent presentation text and enter it into the device.
2) The presentation text is split into fragments corresponding to the presentation frames, placing the marker of the text markup into frames between all the neighbouring frames.
3) To create visual imagery of frames and for each frame of the presentation:
- to create and edit graphic figures of the frame;
- to record visual representation of all actions of creating and editing figures.
4) To record (load) an audio track with verbal voice content of the presentation.
5) To split the audio track with verbal voice content of the presentation into frames.
6) To arrange the presentation prototype, and with that:
a) To prepare its own arrangement file for each frame, and with that:
- to determine the time of frame sounding on the audio track;
- to make uniform time scaling (shrink/expand) of visual representation of creating and editing graphic figures of the frame visual imagery until the duration of the frame visual representation and the duration of its sound matches;
- to determine data of frame visualization (aspect ratio, resolution, color, transparency, FPS, etc.);
- to playback simultaneously the frame audio track and the time scaled visual representation of creating and editing graphic figures of the frame and to record the resulting mix of sound and animation into an arrangement file of the frame;
- to playback the arrangement file of the frame on screen, evaluate it. If the result is positive - to save the file, if it's negative - to move over to editing text, sound, frame figures and the repeated arrangement of that frame;
b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
a) To make the required correction of text, sound or visual imagery of frames in that particular work session and repeatedly arrange the presentation prototype;
b) To save the arranged file of the presentation in a format allowing future editing of text, sound and visual imagery of frames in the next work session;
c) To convert the arrangement file of the presentation into a video-file without possibility of future editing text, sound or images of frames.

3. The method of creating multimedia presentations prototypes includes determination of frames order, their textual and visual content and the order of transition between frames, preparation and mutual composition of text, visual content and audio track of multimedia presentation into audio-video file by using personal computer device (smartphone, tablet, laptop, PC), **deviates** with preparation and mutual arrangement of text, visual content and audio track is done as follows:
1) To record (load) an audio track with verbal voice content of the presentation.
2) To prepare a single coherent presentation text and enter it into the device.
3) The presentation text is split into fragments corresponding to the presentation frames, placing the marker of the text markup into frames between all the neighbouring frames.
4) To split the audio track with verbal voice content of the presentation into frames.
5) To create visual imagery of frames and for each frame of the presentation:
- to create and edit graphic figures of the frame;
- to record visual representation of all actions of creating and editing figures.
6) To arrange the presentation prototype, and with that:
a) To prepare its own arrangement file for each frame, and with that:
- to determine the time of frame sounding on the audio track;
- to make uniform time scaling (shrink/expand) of visual representation of creating and editing graphic figures of the frame visual imagery until the duration of the frame visual representation and the duration of its sound matches;
- to determine data of frame visualization (aspect ratio, resolution, color, transparency, FPS, etc.);
- to playback simultaneously the frame audio track and the time scaled visual representation of creating and editing graphic figures of the frame and to record the resulting mix of sound and animation into an arrangement file of the frame;
- to playback the arrangement file of the frame on screen, evaluate it. If the result is positive - to save the file, if it's negative - to move over to editing text, sound, frame figures and the repeated arrangement of that frame;
b) To combine the arrangement files of the frames with the required order of the frames sequence into the single arrangement audio-visual file of the presentation.
7) To review the arrangement audio-visual file of the presentation for the evaluation of its level of completeness and accordance to the purposes of the presentation. According to the results of evaluation:
a) To make the required correction of text, sound or visual imagery of frames in that particular work session and repeatedly arrange the presentation prototype;
b) To save the arrangement file of the presentation in a format allowing future editing of text, sound and visual imagery of frames in the next work session;
c) To convert the arrangement file of the presentation into a video-file without possibility of future editing text, sound or images of frames.

4. This method **deviates** from any method of items **1, 2** and **3** that the presentation text is inserted into the device by one of the following ways:
a) To load the prepared text from the external source;
b) To type the text by symbols using physical (incl. external) or on-screen keyboard.
c) To insert the text verbally via microphone with automatic words recognition and manual correction of unrecognized fragments.

5. This method **deviates** from any method of items **1, 2** and **3** that the audio track of verbal voice content of the presentation is marked up into frames as follows:
- To display:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
- To listen to sounding and when synchronization of one frame ends and synchronization of another frame begins:
a) In case of manual markup to insert a marker of audio track markup, for example by pressing on image of text bar of the next frame and visually animating set up of the markup, e.g. by changing look of bar edge;
b) In case of automatic speech recognition, automatic matching recognized words to texts of frames and automatic markup of audio track - to check accuracy of automatic sounding markup and if necessary to correct the markup.

6. This method **deviates** from any method of items **1, 2** and **3** that at creation and editing graphic figures of frame the following operations or their combinations are performed additionally:
- to load graphic figures and images from external source;
- to record video/take a photo by the camera integrated into the device and to insert photos and videos into visual imagery of frames;
- automatically detect drawn figures and/or lines and correct their geometry, and if the suggested version is approved then delete originally created figures and/or lines, replace with the edited figures and/or lines, and the duration of creating and editing graphic figures is equal to duration of creating and editing originally created graphic figures and/or lines, excluding actual time for automatic correction and reviewing suggested versions;
- to attach indicating (connective) lines and captions to figures and automatically move matching lines and text along with figures when moving them in course of editing;
- to set a method of transition between visual imageries of two adjacent frames;
- to playback a fragment of audio track of current frame in order to check creation of visual imagery of frame, drawing and editing graphic figures;
- to perform test animation of already created part of visual imagery of frame in order to check creation of visual imagery of frame;

7. This method **deviates** from any method of items **1, 2** and **3** that at creating arrangement file of frame for synchronization of animation with sounding, the time of visual representation of creating and editing graphic figures of the frame visual imagery is determined by one of the following ways:
a) From the start marker of frame sounding on audio track to the end marker of frame sounding (including time of pauses before the first word and after the last one);
b) From the start of actual sounding of the first word of frame text to the end of sounding of the last word of frame text (excluding time of pauses before the first word and after the last one);
Thus in both ways a) and b) the additional delays (pauses) can be inserted before the start of sounding of the first word of the first frame and after ending of sounding of the last word of the last frame.

8. This method **deviates** from any method of items **1, 2** and **3** that the correction of text, sound and visual imagery of frames is made as follows:
1) If there is a visual imagery in the original frame when splitting the original frame into two new frames:
- to split text of the frame by the text markup marker into two fragments corresponding to two new frames;
- to choose which one of two new created frames will have the visual imagery of the original frame;
- to create visual imagery for the second frame created.
2) When integrating two adjacent original frames into one new:
a) If there is no visual imagery in frames - to delete markers of text markup and audio track of frames;
b) If there is visual imagery only in one of the integrated frames - to delete marker of text markup and audio track of frames and to attach visual imagery to the resulting integrated frame;
c) If there are visual imageries in both integrated frames:
- to delete markers of text markup and audio track of frames;
- to create the resulting audio track by consecutive connection of two original audio tracks keeping their original sequence;
- to create the resulting visual imagery by consecutive connection of two original visual imageries keeping their original sequence and rate of timescale of the original frames.

9. This method **deviates** from any method of items **1, 2** and **3** that markup of audio track of the presentation into frames can be corrected as follows:
- to determine two adjacent frames and location of marker of audio track markup to be corrected;
- to display an image of audio track with sounding end marker;
- to playback continuous consistent sounding of both frames and simultaneously visually display a time line with the locator of the current position of marker of audio track markup;
- to move the locator of marker of audio track markup on time line right or left after listening to end of one frame and beginning of the following one;
- to check the result after moving - to playback audio track from time mark N seconds to a new position of marker of audio track markup where N is from 0 to 4 seconds.

10. This method **deviates** from any method of items **1, 2** and **3** that a way of transition between visual imageries of two adjacent frames when opening (creating) a new frame is done in the following ways or their combination:
- to save the image of the previous frame without changes as a start image of a new frame;
- to erase the image of the previous frame completely;
- to erase the entire image of the previous frame by moving eraser tool on screen;
- to erase the image of the previous frame up to background (background image);
- to erase a part of screen field by eraser tool (horizontally);
- to erase chosen elements of the image of the previous frame (to choose by elements);
- to restore a final image of the frame before the previous one (to cancel all changes of the image made on the previous frame);
- to move (rotate) visual field (virtual image sheet) of the previous frame, open a clean space for creating figures of a new frame and leave in sight a small part of the image of the previous frame;
- to minimize into an icon the resulting image of the previous frame placing the icon on the screen field of a new frame (as a reminder of the previous frame);
- to minimize the resulting image of the previous frame and leave it on the screen field of a new frame (for drawing a new image around the previous one);
- to extend the resulting image of the previous frame (a part of the image is possibly out of the frame) and leave the part apparent within the frame edges on the screen field of a new frame (for drawing a new image inside the part of the previous one).

11. A device for creating multimedia presentations prototypes in the form of portable personal computer device (smartphone, tablet, laptop), containing a touch screen display provided with a sensor detecting the position of finger touch, on-screen or physical keyboard, built-in or external microphone, built-in or external speaker, data processing unit, connected to the display, keyboard, microphone and speaker and designed with option to receive, process and output signals and data, and **deviates** that it's designed with the following options:
- when displaying text on screen and user's touching the displayed text to process positions of finger touch as a command of location of the displayed text edges splitting into text fragments and to form data structures in the device memory corresponding to the specified fragments (frames);
- to split the recorded audio track into audio slices and to connect them with the text fragments (frames);
- to record a process of drawing by user's finger touch on the display and connect them with the text fragments (frames);
- to scale (shrink/expand) proportionally on the display playback time of drawing process by user's finger touch;
- to display on screen the recorded process of figures drawing corresponding to the matching text fragments (frames) on a time scale equal to sound duration of the audio slices corresponding to these text fragments (frames) with simultaneous playback of these audio fragments.

12. The device **deviates** from **item 11** that the data processing unit is designed with the option to perform the following operations or their combinations:
- automatically detect verbal text pronunciation;
- automatically divide the recorded audio track into audio slices and connect these audio slices with the matching text fragments (frames);
- automatically detect drawn graphic figures and chose their smoothed and/or regular-shaped equivalents from the image library.

13. A device for creating multimedia presentations prototypes consisting of the fragments (frames) designed in the form of portable personal computer device (smartphone, tablet, laptop) with a touch screen display provided with a sensor detecting the position of finger touch so when touching different zones of the panel the device switches to corresponding modes of operation; a device on-screen mode of operations selection panel designed in the form of a bar visually divided into field-buttons with symbolic representations of device operation modes (icons), so when pressing on these field-buttons they expand lengthwise (unfold) and sub-buttons available in these modes of operations of the device appears; on-screen or physical keyboard, built-in or external microphone, built-in or external speaker, data processing unit, connected with the display, keyboard, microphone and speaker and designed with option to receive, process and output signals and data, **deviates** with:
a) A device mode of operations selection panel is located in upper section of the screen across the entire width and is provided with fields-buttons "*Presentation management",* "*Text editing*", "*sound editing*", "*graphic editing*";
b) A work field of active operation mode is displayed under the selection panel on the device screen, thus at launching (startup) of the device:
- if the processed multimedia presentations prototype is not chosen, the device switches to *"Presentation management* " mode; thus icons (final drawings) available for review or editing of the presentations prototypes with captions are displayed in a work field;
- if the prototype is chosen at launch the device switches to "*Text editing"* mode of the chosen prototype, thus the text of prototype is displayed in a work field.

14. The device **deviates** from item **13** that the field-button "*Presentation management* " after it's opened (pressed) contains sub-buttons *"Create presentation", "Open presentation for editing",* "*launch demonstration of presentation",* "*Delete presentation", "Save presentation as*", thus the icons (final drawings) of presentation prototypes with captions are displayed in a work field.

15. The device **deviates** from item **13** that field-button "*Text editing"* after it's opened (pressed) contains sub-buttons *"Text import", "Text verbal dictation with recognition", "Text input from on-screen keyboard", "Insert the marker of the frame text edge",* thus the text of the prototype is displayed in a work field.

16. The device **deviates** from item **13** that field-button "*sound editing"* after it's opened (pressed) contains sub-buttons *"Import sound from file and markup sound into words*", "*Record sound from microphone and markup sound into words*", thus the text of the prototype visually split into segments (bars) corresponding to fragments (frames) of the presentation is displayed in a work field, so that the text part of the presentation for which an audio track is already marked up into fragments (frames) visually different from the part for which markup is not done yet.

17. The device **deviates** from item **13** that field-button *"Graphic editing"* after it's opened (pressed) contains sub-buttons "*Turn on*/*turn off figures automatic recognition mode*", "*Turn on*/*turn off text narrator", "Move forward*/*back through frames",* thus image sheet (canvas), tools and palette for creating and editing graphic images of the current fragment (frame) is displayed in a work field.

18. The device **deviates** from item **16** that if at opening (pressing) "*Sound editing"* button there are graphic images of the presentation fragments (frames), the icons of graphic images corresponding to these fragments (frames) are displayed in segments (bars) of a work field along with the text.

19. The device **deviates** from item **16** that segments (bars) of a work field are designed with an option of their pressing by finger, so at pressing them pronounceable or recognizable text is attached to fragment (frame) text displayed in a current segment (bar) of a work field.

20. The device **deviates** from item **16** that the text displayed in segments (bars) of a work field is designed with an option of its tactile selecting and moving from a segment (bar) of one fragment (frame) to another.

21. The device **deviates** from item **17** that sub-button *"Move forward*/*back through frames"* for the frame starting from the second is designed in the form of two buttons " *Scroll forward*/*back"* and *"Select the look of transition between frames",* so when pressing by finger button *"Select the look of transition between frames"* a list of selection of transition mode is available which is designed as set of the following buttons: *"Save frame image as starting image of the next frame", "Erase frame image entirely and instantly", "Erase frame image entirely with delay", "Erase frame image entirely with eraser tool", "Erase frame image up to background* ", "*Erase part of frame image with eraser tool",* "*Erase selected elements of frame image", "Restore final image of the frame before the previous*", *"Move* (*rotate*) *the image opening blank space to create figures of a new frame and leaving in sight a small part of the previous frame image",* "*Minimize frame image placing the icon on the field of a new frame*", *"Shrink frame image and leave it on the field of a new frame*", "*Expand frame image and leave it on the field of a new frame".*

22. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
7) Press sound editing button and switch the device to a sound editing mode of the presentation.
8) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
9) At audio playback launch to display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
10) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
11) Press graphic editing button and switch the device to Graphic editing of the presentation frames mode, thus image sheet (canvas), tools and palette for creating and editing graphic images is displayed in a work field starting from the first one.
12) In graphic editing mode press buttons corresponding to selected tools of graphics palette and create and edit graphic figures of the frame by touching the device screen in the area of sheet (canvas), thus record a visual representation of all actions for creating and editing figures.
13) In graphic editing mode the following buttons can be pressed:
a) Turn on/turn off figures automatic recognition mode;
b) Turn on/turn off text and/or audio narrator;
c) Move *forward*/*back* through frames;
d) Select the look of transition between frames.
14) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.

23. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
7) Press graphic editing button and switch the device to Graphic editing of the presentation frames mode, thus image sheet (canvas), tools and palette for creating and editing graphic images is displayed in a work field starting from the first one.
8) In graphic editing mode press buttons corresponding to selected tools of graphics palette and create and edit graphic figures of the frame by touching the device screen in the area of sheet (canvas), thus record a visual representation of all actions for creating and editing figures.
9) In graphic editing mode the following buttons can be pressed:
a) Turn on/turn off figures automatic recognition mode;
b) Turn on/turn off text and/or audio narrator;
c) Move forward/back through frames;
d) Select the look of transition between frames.
10) Press sound editing button and switch the device to a sound editing mode of the presentation.
11) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
12) At audio playback launch to display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
13) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
14) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.

24. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode.
4) Press sound editing button and switch the device to a sound editing mode of the presentation.
5) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
6) Press text editing button and switch the device to creation of text part of presentation mode.
7) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
8) Enter text into the device, thus the entered text is placed in a work field of the device screen.
9) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
10) Press sound editing button and switch the device to a sound editing mode of the presentation, thus display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
11) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
12) Press graphic editing button and switch the device to Graphic editing of the presentation frames mode, thus image sheet (canvas), tools and palette for creating and editing graphic images is displayed in a work field starting from the first one.
13) In graphic editing mode press buttons corresponding to selected tools of graphics palette and create and edit graphic figures of the frame by touching the device screen in the area of sheet (canvas), thus record a visual representation of all actions for creating and editing figures.
14) In graphic editing mode the following buttons can be pressed:
a) Turn on/turn off figures automatic recognition mode;
b) Turn on/turn off text and/or audio narrator;
c) Move forward/back through frames;
d) Select the look of transition between frames.
15) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
16) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.

25. The device deviates from item 11 that the data processing unit is designed with the option to perform the following operations or their combinations:
- automatically detect verbal text pronunciation;
- automatically divide the recorded audio track into audio slices and connect these audio slices with the matching text fragments (frames);
- automatically detect drawn graphic figures and chose their smoothed and/or regularshaped equivalents from the image library.

26. A device for creating multimedia presentations prototypes consisting of the fragments (frames) designed in the form of portable personal computer device (smartphone, tablet, laptop) with a touch screen display provided with a sensor detecting the position of finger touch so when touching different zones of the panel the device switches to corresponding modes of operation; a device on-screen mode of operations selection panel designed in the form of a bar visually divided into field-buttons with symbolic representations of device operation modes (icons), so when pressing on these field-buttons they expand lengthwise (unfold) and sub-buttons available in these modes of operations of the device appears; on-screen or physical keyboard, built-in or external microphone, built-in or external speaker, data processing unit, connected with the display, keyboard, microphone and speaker and designed with option to receive, process and output signals and data, **deviates** with:
a) A device mode of operations selection panel is located in upper section of the screen across the entire width and is provided with fields-buttons *"Presentation management", "Text editing", "Sound editing", "graphic editing";*
b) A work field of active operation mode is displayed under the selection panel on the device screen, thus at launching (startup) of the device:
- if the processed multimedia presentations prototype is not chosen, the device switches to *"Presentation management* " mode; thus icons (final drawings) available for review or editing of the presentations prototypes with captions are displayed in a work field;
- if the prototype is chosen at launch the device switches to *"Text editing"* mode of the chosen prototype, thus the text of prototype is displayed in a work field.

27. The device **deviates** from item **13** that the field-button *"Presentation management*" after it's opened (pressed) contains sub-buttons *"Create presentation", "Open presentation for editing",* "*Launch demonstration of presentation", "Delete presentation", "Save presentation as",* thus the icons (final drawings) of presentation prototypes with captions are displayed in a work field.

28. The device **deviates** from item **13** that field-button *"Text editing"* after it's opened (pressed) contains sub-buttons *"Text import", "Text verbal dictation with recognition", "Text input from on-screen keyboard", "Insert the marker of the frame text edge",* thus the text of the prototype is displayed in a work field.

29. The device **deviates** from item **13** that field-button *"Sound editing"* after it's opened (pressed) contains sub-buttons *"Import sound from file and markup sound into words", "Record sound from microphone and markup sound into words",* thus the text of the prototype visually split into segments (bars) corresponding to fragments (frames) of the presentation is displayed in a work field, so that the text part of the presentation for which an audio track is already marked up into fragments (frames) visually different from the part for which markup is not done yet.

30. The device **deviates** from item **13** that field-button *"Graphic editing"* after it's opened (pressed) contains sub-buttons "*Turn on*/*turn off figarres automatic recognition mode* ", "*Turn on*/*turn off text narrator", "Move forward*/*back through frames",* thus image sheet (canvas), tools and palette for creating and editing graphic images of the current fragment (frame) is displayed in a work field.

31. The device **deviates** from item **16** that if at opening (pressing) *"Sound editing"* button there are graphic images of the presentation fragments (frames), the icons of graphic images corresponding to these fragments (frames) are displayed in segments (bars) of a work field along with the text.

32. The device **deviates** from item **16** that segments (bars) of a work field are designed with an option of their pressing by finger, so at pressing them pronounceable or recognizable text is attached to fragment (frame) text displayed in a current segment (bar) of a work field.

33. The device **deviates** from item **16** that the text displayed in segments (bars) of a work field is designed with an option of its tactile selecting and moving from a segment (bar) of one fragment (frame) to another.

34. The device **deviates** from item **17** that sub-button *"Move forward*/*back through frames"* for the frame starting from the second is designed in the form of two buttons " *Scroll forward*/*back"* and *"Select the look of transition between frames",* so when pressing by finger button *"Select the look of transition between frames"* a list of selection of transition mode is available which is designed as set of the following buttons: *"Save frame image as starting image of the next frame", "Erase frame image entirely and instantly", "Erase frame image entirely with delay", "Erase frame image entirely with eraser tool", "Erase frame image up to background*", *"Erase part of frame image with eraser tool", "Erase selected elements of frame image", "Restore final image of the frame before the previous", "Move (rotate) the image opening blank space to create figures of a new frame and leaving in sight a small part of the previous frame image", "Minimize frame image placing the icon on the field of a new frame", "Shrink frame image and leave it on the field of a new frame", "Expand frame image and leave it on the field of a new frame".*

35. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
7) Press sound editing button and switch the device to a sound editing mode of the presentation.
8) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
9) At audio playback launch to display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
10) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
11) Press graphic editing button and switch the device to Graphic editing of the presentation frames mode, thus image sheet (canvas), tools and palette for creating and editing graphic images is displayed in a work field starting from the first one.
12) In graphic editing mode press buttons corresponding to selected tools of graphics palette and create and edit graphic figures of the frame by touching the device screen in the area of sheet (canvas), thus record a visual representation of all actions for creating and editing figures.
13) In graphic editing mode the following buttons can be pressed:
a) Turn on/turn off figures automatic recognition mode;
b) Turn on/turn off text and/or audio narrator;
c) Move forward/back through frames;
d) Select the look of transition between frames.
14) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.

36. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode, press text editing button and switch the device to creation of text part of presentation mode.
4) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
5) Enter text into the device, thus the entered text is placed in a work field of the device screen.
6) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
7) Press graphic editing button and switch the device to Graphic editing of the presentation frames mode, thus image sheet (canvas), tools and palette for creating and editing graphic images is displayed in a work field starting from the first one.
8) In graphic editing mode press buttons corresponding to selected tools of graphics palette and create and edit graphic figures of the frame by touching the device screen in the area of sheet (canvas), thus record a visual representation of all actions for creating and editing figures.
9) In graphic editing mode the following buttons can be pressed:
a) Turn on/turn off figures automatic recognition mode;
b) Turn on/turn off text and/or audio narrator;
c) Move forward/back through frames;
d) Select the look of transition between frames.
10) Press sound editing button and switch the device to a sound editing mode of the presentation.
11) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
12) At audio playback launch to display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
13) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
14) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
15) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.

37. Method of using the device for creation of multimedia presentations prototypes with keyboard, microphone, speaker and screen provided with sensor detecting the position of finger touch on display; where the control and selection of devices operation modes buttons and a work field of data processing are displayed and including entering text, sound and graphic symbols, their processing and composition into an audiovisual file of the multimedia presentation, **deviates with** the device is used as follows:
1) After launching switch the device to the presentation management mode.
2) Press Create presentation button and switch the device to creation of presentation mode.
3) Name the presentation in creation of presentation mode.
4) Press sound editing button and switch the device to a sound editing mode of the presentation.
5) In sound editing mode select a source of sound so that depending on the source press the following buttons:
a) At importing sound from external file - sound import from external file button, external file location button and launch/stop audio playback button;
b) At recording sound from microphone - record sound from microphone button and launch/stop audio playback button.
6) Press text editing button and switch the device to creation of text part of presentation mode.
7) In Creation of text part of presentation mode press the button corresponding to the way of the presentation text input in the device, as follows:
a) At importing text from external file - import text button;
b) At text input from on-screen keyboard - show on-screen keyboard button;
c) At verbal text input with automatic recognition - verbal dictation with recognition button.
8) Enter text into the device, thus the entered text is placed in a work field of the device screen.
9) Insert markers of fragment (frame) text edge, in order to press set the marker of frame text edge button and after that press:
a) At importing text from external file or entering text from on-screen keyboard - on the text displayed in a work field inside the markers of frames text edges;
b) At verbal text entering with automatic words recognition and placing markers of words edges - on markers of words edges inside the markers of frames text edges.
10) Press sound editing button and switch the device to a sound editing mode of the presentation, thus display on screen:
a) Text of frames sounding (synchronized) at that particular moment visually presented as segments (bars) corresponding to the frames of the presentation, so visual representation of text, bars or edges of for the frames for which the audio track has already been marked up into fragments (frames) is visually different from presentation of text, bars or edges of bars for the frames for which the audio track has not been marked up yet;
b) Mutual visual border of text content of the presentation corresponding to splitting frames into the frames with marked up and not marked up sounding so that visual location of the border on screen stays constant as a result of move (scrolling) of frame bars in process of marking up.
11) At audio playback listen to sounding and when synchronization of one frame ends and synchronization of another frame begins:
a) At manual markup - press on image of text bar of the next frame and insert the displayed marker of audio track markup, thus additionally visually animate setup of the markup, e.g. by changing look of bar edge;
b) At automatic speech recognition, automatic matching recognized words to texts of frames and automatic markup of audio track - to check accuracy of automatic sounding markup, and if an error of recognition and markup is detected - press launch/stop audio playback button and correct the markup.
12) Press graphic editing button and switch the device to Graphic editing of the presentation frames mode, thus image sheet (canvas), tools and palette for creating and editing graphic images is displayed in a work field starting from the first one.
13) In graphic editing mode press buttons corresponding to selected tools of graphics palette and create and edit graphic figures of the frame by touching the device screen in the area of sheet (canvas), thus record a visual representation of all actions for creating and editing figures.
14) In graphic editing mode the following buttons can be pressed:
a) Turn on/turn off figures automatic recognition mode;
b) Turn on/turn off text and/or audio narrator;
c) Move forward/back through frames;
d) Select the look of transition between frames.
15) Press demonstration of the presentation button and switch the device to arrangement and demonstration of the presentation mode, thus:
a) Determine time of frame sounding at audio track for each frame;
b) Make uniform time scaling (shrink/expand) of visual representation of creating and editing graphic figures of visual imagery of each frame until the duration of the frame visual representation and the duration of its sound matches;
c) Determine data of frame visualization (aspect ratio, resolution, color, transparency, FPS, etc.);
d) Launch via speaker playback of audio track of the presentation and on the screen the time scaled visual representation of creating and editing graphic figures of frames in their sequence and record the resulting mix of sound and animation into an arrangement audiovisual file of the presentation.
16) Review demonstration of the presentation, evaluate its level of completeness and accordance to the purposes of the presentation. According to the results of evaluation:
a) Press the buttons of text, sound or graphic editing and move over to text, sound or graphic correction in this particular work session and to repeated arrangement of the presentation;
b) Press Save work version of file button and save the arrangement file of the presentation in format allowing future editing of text, sound and visual imagery of frames in the next work session;
c) Press Save as video file button and convert the arrangement file of the presentation into a video-file without possibility of future editing text, sound or images of frames.
